# FASCICULE DE BREVET EUROPEEN

(11) **EP 3 375 697 B1**
(45) Date de publication et mention de la délivrance du brevet: **29.04.2020**
(21) Numéro de dépôt: 18162072.5
(22) Date de dépôt: 15.03.2018
(51) Int. Cl.: B62D 25/04, B62D 25/14

(54) **PIED AVANT MUNI D'UN SUPPORT DE FIXATION POUR UNE TRAVERSE DE PLANCHE DE BORD DE VÉHICULE AUTOMOBILE**
A-SÄULE EINES FAHRZEUGS, DIE MIT EINER BEFESTIGUNGSHALTERUNG FÜR EINE QUERSTREBE DES ARMATURENBRETTS EINES KRAFTFAHRZEUGS AUSGESTATTET IST
A-PILLAR PROVIDED WITH A MOUNTING FOR SECURING A MOTOR VEHICLE DASHBOARD CROSSBAR

(30) Priorité: 17.03.2017 FR 1752228
(43) Date de publication de la demande: 19.09.2018
(73) Titulaire: RENAULT s.a.s., 92100 Boulogne-Billancourt (FR)
(72) Inventeur: CARRIE, Julien, 78000 VERSAILLES (FR); VIVERO, François, 78860 Saint Nom La Brétèche (FR); RUBION, Pascal, 78310 COIGNERES (FR)

(56) Documents cités:
- CN-U- 203 402 276
- FR-A1- 2 915 725
- FR-A1- 2 997 371
- US-A- 4 826 234
- US-A- 5 564 769

## Description

L'invention concerne une doublure de pied avant d'un véhicule automobile comprenant un support pour la fixation d'une traverse de planche de bord. Une telle doublure de pied avant est connue des documents CN 203402276 U, FR 2997371 A1, ou encore du document US 5564769 A1.

L'invention porte aussi sur un pied avant comprenant une telle doublure. L'invention porte également sur une structure de caisse comprenant un tel pied avant ou une telle doublure de pied avant. L'invention porte encore sur un véhicule automobile comprenant une telle structure de caisse, un tel pied avant ou une telle doublure de pied avant. L'invention porte enfin sur un procédé d'obtention d'une telle doublure de pied avant. Généralement une planche de bord de véhicule automobile s'étend sensiblement sous un pare brise en étant supportée par une traverse de planche de bord aussi appelée poutre de planche de bord. Cette traverse de planche de bord s'étend transversalement depuis un pied avant droit jusqu'à un pied avant gauche.

La direction selon laquelle le véhicule automobile se déplace en ligne droite est définie comme étant la direction longitudinale. Par convention, la direction perpendiculaire à la direction longitudinale, située dans un plan parallèle au sol, est nommée direction transversale. La troisième direction, perpendiculaire aux deux autres, est nommée direction verticale.

Un pied avant est généralement composé d'au moins une première et une deuxième parois, sensiblement disposées en vis-à-vis, selon une direction transversale. Ainsi, la première paroi a une première face orientée vers l'intérieur du véhicule automobile, c'est-à-dire vers l'habitacle. A noter que cette première paroi est communément appelée doublure. La deuxième face de cette doublure est alors orientée vers l'extérieur, c'est-à-dire dans la direction opposée à l'habitacle.

Une première solution de fixation de la traverse de planche de bord, notamment sur une doublure de pied avant, est d'interposer un boîtier soudé sur la doublure de pied avant entre la doublure de pied avant et la traverse de planche de bord. Une deuxième solution consiste à fixer directement la traverse de planche de bord sur la doublure de pied avant, la doublure de pied avant présentant à cet effet une zone emboutie.

La première solution manque de rigidité et est lourde à mettre en œuvre donc coûteuse. La seconde solution est davantage économique mais les possibilités d'emboutissage sont limitées.

Le but de l'invention est de fournir un support de fixation d'une traverse de planche de bord sur une doublure de pied avant de véhicule automobile remédiant aux inconvénients ci-dessus et améliorant les supports de fixation de traverse de planche de bord connus de l'art antérieur. En particulier, l'invention propose une doublure de pied avant permettant de fixer de manière simple et économique une traverse de planche de bord en évitant d'impacter les possibilités d'emboutissage de la doublure de pied avant.

L'invention porte sur une doublure d'un pied avant de véhicule automobile, comprenant un support de fixation destiné à fixer une traverse de planche de bord du véhicule automobile sur la doublure, le support de fixation comprenant une partie conformée de la doublure et une pièce rapportée présentant chacune une demi-coque.

Le support de fixation peut comprendre ou former un corps creux, notamment un corps creux en forme de boîtier.

La partie conformée de la doublure peut présenter une forme convexe s'étendant vers l'intérieur du véhicule automobile.

La pièce rapportée peut présenter une forme convexe s'étendant vers l'intérieur du véhicule automobile et peut être apte à venir en prolongement de la partie conformée de la doublure.

La pièce rapportée peut être soudée et/ou collée et/ou rivetée sur la doublure.

La pièce rapportée peut avoir une épaisseur de 1 mm à 3,5 mm, notamment 2 mm, et/ou la pièce rapportée peut avoir une épaisseur différente de l'épaisseur de la doublure et/ou la pièce rapportée peut être en un deuxième matériau, notamment un acier, différent d'un premier matériau, notamment de l'acier, de la doublure.

La pièce rapportée peut comprendre des moyens de fixation, notamment au moins un taraudage d'axe sensiblement horizontal et longitudinal, destinés à la fixation d'une traverse de planche de bord sur la doublure.

La partie conformée de la doublure peut s'étendre à la fois verticalement et longitudinalement vers l'avant, la pièce rapportée pouvant s'étendre à la fois verticalement et longitudinalement vers l'arrière, notamment jusqu'à une feuillure de porte avant.

L'invention porte également sur un pied avant de véhicule automobile comprenant une doublure telle que définie précédemment.

L'invention porte encore sur une structure de caisse de véhicule automobile comprenant au moins un pied avant tel que défini précédemment et/ou une doublure telle que définie précédemment.

L'invention porte encore sur un véhicule automobile comprenant une structure de caisse telle que définie précédemment et/ou au moins un pied avant tel que défini précédemment, et/ou une doublure telle que définie précédemment.

L'invention porte enfin sur un procédé d'obtention d'une doublure de pied avant telle que définie précédemment comprenant les étapes suivantes :
- fourniture d'une première tôle métallique,
- emboutissage de la première tôle métallique afin d'obtenir une première partie de doublure de pied avant dotée d'une partie conformée,
- fourniture d'une deuxième tôle métallique,
- emboutissage de la deuxième tôle métallique afin d'obtenir une pièce à rapporter,
- assemblage, notamment par soudure et/ou collage et/ou rivetage, de la pièce à rapporter sur la première partie de doublure de pied avant dotée d'une partie conformée de sorte à former une doublure de pied avant.

Ces objets, caractéristiques et avantages de la présente invention seront exposés en détail dans la description suivante d'un mode de réalisation d'une doublure de pied avant faite à titre non-limitatif en relation avec les figures jointes parmi lesquelles :
La figure 1 représente une vue schématique d'un véhicule automobile selon un mode de réalisation de l'invention.
La figure 2 représente une vue partielle d'un pied avant selon un mode de réalisation de l'invention.

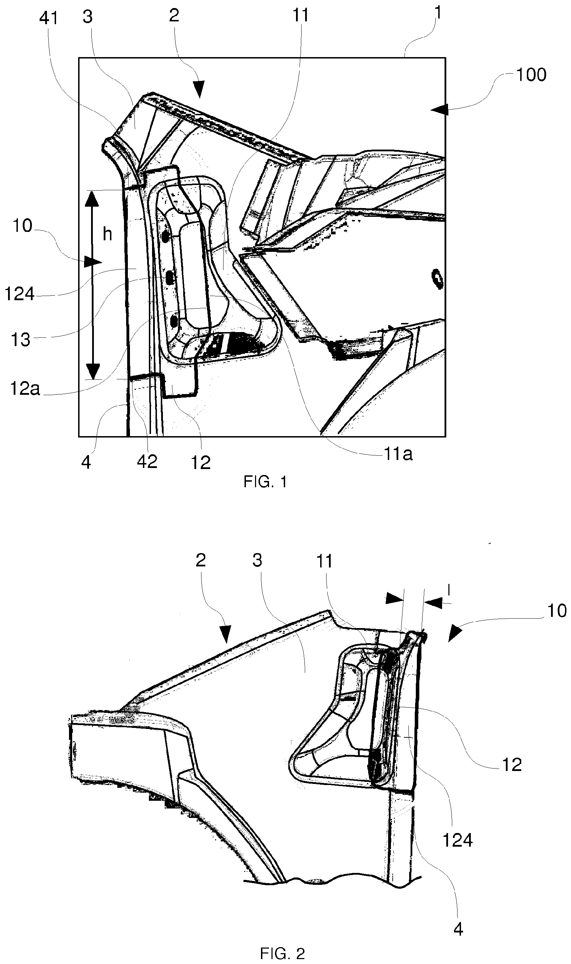

Comme illustré sur la figure 1, un véhicule automobile 1 comprend une structure de caisse 100 dotée, ici du côté gauche, d'un pied avant 2.

Il va de soi que la structure de caisse 100 est dotée également d'un pied avant côté droit, et que ce qui va être précisé ci-dessous concernant le pied avant 2 côté gauche peut également s'appliquer au pied avant côté droit.

Le pied avant 2 comprend une doublure 3, fabriquée dans un premier matériau, par exemple à partir d'une tôle d'acier.

Afin de pouvoir assurer la fixation d'une traverse de planche de bord, la doublure 3 du pied avant 2 du véhicule automobile 1 comprend un support de fixation 10. Le support de fixation 10 comprend d'une part une partie conformée 11 de la doublure 3. Le support de fixation 10 comprend d'autre part une pièce rapportée 12, de préférence assemblée sur la doublure 3 comme il sera détaillé par la suite. Ainsi, on entend par pièce rapportée 12, une pièce destinée à être fixée au reste de la doublure, c'est-à-dire qu'une fois qu'elle a été rapportée sur le reste de la doublure, on obtient la doublure 3. La pièce rapportée fait donc partie de la doublure.

A noter que la figure 1 illustre un pied avant 2 gauche vu depuis l'intérieur du véhicule automobile 1, c'est-à-dire depuis l'habitacle. A l'inverse, la figure 2 illustre un pied avant 2 gauche vu depuis l'extérieur du véhicule automobile 1.

Ainsi, la partie conformée 11 de la doublure 3 présente une forme convexe s'étendant vers l'intérieur du véhicule automobile 1. En d'autres termes, la partie conformée 11 crée une protubérance, une première demi-coque, s'étendant dans l'habitacle du véhicule automobile 1. Dans le cas d'une doublure 3 en tôle d'acier, la partie conformée 11 pourrait être obtenue par emboutissage. La pièce rapportée 12 présente également une forme convexe s'étendant vers l'intérieur du véhicule automobile 1. Ainsi, la pièce rapportée 12 crée également une protubérance, une deuxième demi-coque, s'étendant dans l'habitacle du véhicule automobile 1. La pièce rapportée 12 est fabriquée dans le premier matériau, à savoir une tôle d'acier, ou dans un deuxième matériau. En cas de choix d'une tôle d'acier pour la pièce rapportée 12, elle pourrait être obtenue par emboutissage.

De préférence, la pièce rapportée 12 est apte à venir en prolongement de la partie conformée 11 de la doublure 3. Ainsi, une deuxième arête 12a de la pièce rapportée 12 est apte à venir au contact, ou sensiblement au contact, d'une première arête 11a de la partie conformée 11 de la doublure 3. De préférence, les première et deuxième arêtes 11a, 12a présentent des formes et dimensions sensiblement identiques. Les première et deuxième arêtes 11a, 12a sont par exemple assemblées « bord à bord », par soudage et/ou brasage et/ou collage. A noter que les première et deuxième arêtes 11a, 12a s'étendent par exemple sensiblement depuis une première limite 41 de feuillure 4 de porte avant jusqu'à une deuxième limite 42 de feuillure 4 de porte avant. Les première et deuxième limites 41, 42 correspondent ici aux « frontières » entre la partie conformée 11, la pièce rapportée 12 et la feuillure 4 de porte avant. Ainsi, la première arête 11a correspond sensiblement au pourtour de la partie conformée 11 en regard de la deuxième arête 12a de la pièce rapportée 12. Une hauteur h, le long de la feuillure 4 de porte avant, sépare la première limite 41 de la deuxième limite 42 de la feuillure 4. La hauteur h est par exemple comprise entre 100 mm et 200 mm, par exemple 160 mm.

Comme vu précédemment, la pièce rapportée 12 est de préférence soudée et/ou collée, et/ou peut être rivetée sur la doublure 3. En cas de rivetage, les première et deuxième arêtes 11a, 12a présentent des formes éventuellement similaires mais de dimensions différentes. En effet, les première et deuxième arêtes 11a, 12a sont alors distantes, la pièce rapportée 12 chevauchant la doublure 3, par exemple une portion de la partie conformée 11 de la doublure 3. A l'inverse, il peut être envisagé que la partie conformée 11 de la doublure 3 chevauche la pièce rapportée 12. Ce chevauchement se fait évidemment d'une valeur adaptée à l'insertion de rivets et de sorte à obtenir une très bonne rigidité de la pièce rapportée 12 sur la doublure 3. En cas de soudure par points, un chevauchement est également prévu, de préférence le long des première et deuxième arêtes 11a, 12a. Enfin, un chevauchement peut être prévu en cas de soudure, collage ou brasage.

La pièce rapportée 12 et la partie conformée 11 de la doublure 3 présentant chacune une demi-coque vers l'habitacle, elles forment, après assemblage, le support de fixation 10 qui comprend ou forme alors un corps creux, notamment un corps creux en forme de boîtier.

En outre, la pièce rapportée 12 a par exemple une épaisseur de 1 mm à 3,5 mm, par exemple 2 mm, c'est-à-dire que son épaisseur peut être différente, par exemple supérieure à l'épaisseur de la doublure 3 dont l'épaisseur est par exemple comprise entre 0,7 mm et 1,2 mm. Plus la pièce rapportée 12 est épaisse, plus elle apporte de la rigidité au support de fixation 10. Une telle pièce rapportée 12, notamment d'épaisseur supérieure à l'épaisseur de la doublure 3, peut alors assurer à elle seule la fonction de feuillure 4 de porte avant sur toute la hauteur h, c'est-à-dire entre la première limite 41 et la deuxième limite 42.

Le support de fixation 10 comprend des moyens de fixation pour fixer la traverse de planche de bord sur le support de fixation 10 et donc sur la doublure 3. De préférence, les moyens de fixations sont prévus sur la pièce rapportée 12 et comprennent par exemple au moins un taraudage 13 d'axe sensiblement horizontal et longitudinal. Comme représentés sur la figure 1, trois taraudages ont été retenus. Un nombre différent de taraudages, notamment deux, et d'axes éventuellement différents pourraient convenir. En outre, il peut être envisagé d'autres moyens de fixation, par exemple au moins un taraudage dans la partie conformée 11 de la doublure 3, d'axe sensiblement horizontal et longitudinal ou encore d'axe différent. Enfin, d'autres moyens de fixation, tels que des systèmes vis écrous pourraient convenir. Le support de fixation 10 s'entend ainsi comme une première interface de fixation solidaire de la doublure 3 de pied avant qui est destinée à venir au contact, ou à venir sensiblement au contact, d'une deuxième interface de fixation qui est rendue solidaire de la traverse lors de l'assemblage de la traverse sur la doublure 3.

De préférence, la partie conformée 11 de la doublure 3 s'étend à la fois verticalement et longitudinalement vers l'avant du véhicule automobile 1, la pièce rapportée 12 s'étendant à la fois verticalement et longitudinalement vers l'arrière du véhicule automobile 1. De préférence encore, comme évoqué précédemment, la pièce rapportée 12 s'étend jusqu'à la feuillure 4 de porte avant créant elle-même partiellement la feuillure 4 de porte avant sur la hauteur h en venant linéairement en prolongement de la feuillure 4 de porte issue du reste de la doublure 3.

Ainsi, un support de fixation 10, destiné à fixer une traverse de planche de bord, s'étend en direction de l'habitacle. Autrement dit un boîtier, de type coque, est reconstitué via la pièce rapportée 12 assemblée à la partie conformée 11 de la doublure 3. Ce boîtier, de forme creuse donc, n'empiète pas sur la feuillure 4 de porte. En effet, la pièce rapportée 12 comprend de préférence une bordure 124, sensiblement plane, assurant la suite de la feuillure 4 de porte entre la première limite 41 et la deuxième limite 42. Cette bordure 124 a par exemple une largeur l comprise entre 11 mm et 15 mm, par exemple 12 mm.

Il résulte de telles formes embouties et assemblées un support de fixation 10 présentant un « effet coque », c'est-à-dire une raideur optimale, sans conséquence notable sur la masse de la doublure 3, ni sur l'encombrement. Un tel support de fixation 10 offre la raideur d'accueil nécessaire au comportement dynamique de la traverse de planche de bord, sans nuire à la géométrie de la feuillure 4 de porte avant.

Enfin, un procédé d'obtention de la doublure 3 de pied avant 2, de préférence à partir de tôles métalliques, peut par exemple comprendre les étapes suivantes :
- fourniture d'une première tôle métallique,
- emboutissage de la première tôle métallique afin d'obtenir une première partie de doublure 3 de pied avant 2 dotée de la partie conformée 11,
- fourniture d'une deuxième tôle métallique,
- emboutissage de la deuxième tôle métallique afin d'obtenir la pièce à rapporter 12,
- assemblage, notamment par soudure et/ou collage et/ou rivetage, de la pièce à rapporter 12 sur la première partie de doublure 3 de pied avant 2 dotée de la partie conformée 11 de sorte à former la doublure 3 de pied avant 2.

En remarque, la solution atteint donc l'objet recherché de fournir un support de fixation 10 de traverse de planche de bord amélioré et présente les avantages suivants :
- La doublure 3 ne présentant qu'une première demi-coque, sa forme est donc simplifiée et elle peut ainsi être aisément obtenue par emboutissage, les dépouilles et rayons ne présentant pas de difficulté.
- La pièce rapportée 12 ne présentant qu'une deuxième demi-coque, elle peut être aisément obtenue par emboutissage, les dépouilles et rayons ne présentant pas de difficulté, même au cas où elle serait plus épaisse que la doublure 3.
- En cas de pièce rapportée 12 d'épaisseur supérieure à l'épaisseur de la doublure 3 pour augmenter la rigidité du support de fixation 10, la masse de la doublure 3 munie du support de fixation 10 n'est que peu impactée, la surface de la pièce rapportée 12 étant faible par rapport à celle de la doublure 3.
- La forme de boîtier du support de fixation 10, gage de rigidité, est obtenue sans difficulté d'emboutissage et sans conséquence sur l'accès par une porte avant du véhicule automobile 1, la feuillure 4 étant suffisamment distante du boîtier.

L'invention porte sur la doublure 3 du pied avant 2 munie du support de fixation 10 et est particulièrement bien adaptée à un véhicule automobile 1 ayant besoin de rigidité pour la fixation de la traverse de planche de bord. Elle porte également sur un pied avant 2 muni d'une telle doublure 3. Elle porte également sur une structure de caisse 100 de véhicule automobile 1 munie d'un tel pied avant 2 ou d'une telle doublure 3. Elle porte encore sur un véhicule automobile 1 munie d'une telle structure de caisse 100, d'un tel pied avant 2 ou d'une telle doublure 3. Elle porte enfin sur un procédé d'obtention d'une telle doublure 3.

En résumé, la doublure 3 équipée du support de fixation 10 est particulièrement bien adaptée à un véhicule automobile 1 nécessitant de la rigidité au niveau de sa traverse de planche de bord, notamment afin d'atténuer la fréquence de vibration de la colonne de direction ou encore améliorer le comportement en cas de choc frontal.

## Revendications

1. Doublure (3) d'un pied avant (2) de véhicule automobile (1), comprenant un support de fixation (10) destiné à fixer une traverse de planche de bord du véhicule automobile (1) sur la doublure (3), **caractérisée en ce que** le support de fixation (10) comprend une partie conformée (11) de la doublure (3) et une pièce rapportée (12) présentant chacune une demi-coque.

2. Doublure (3) selon la revendication précédente, **caractérisée en ce que** le support de fixation (10) comprend ou forme un corps creux, notamment un corps creux en forme de boîtier.

3. Doublure (3) selon l'une des revendications précédentes, **caractérisée en ce que** la partie conformée (11) de la doublure (3) présente une forme convexe s'étendant vers l'intérieur du véhicule automobile (1).

4. Doublure (3) selon l'une des revendications précédentes, **caractérisée en ce que** la pièce rapportée (12) présente une forme convexe s'étendant vers l'intérieur du véhicule automobile (1) et est apte à venir en prolongement de la partie conformée (11) de la doublure (3).

5. Doublure (3) selon l'une des revendications précédentes, **caractérisée en ce que** la pièce rapportée (12) est soudée et/ou collée et/ou rivetée sur la doublure (3).

6. Doublure (3) selon l'une des revendications précédentes, **caractérisée en ce que** la pièce rapportée (12) a une épaisseur de 1 mm à 3,5 mm, notamment 2 mm, et/ou **en ce que** la pièce rapportée (12) a une épaisseur différente de l'épaisseur de la doublure (3) et/ou **en ce que** la pièce rapportée (12) est en un deuxième matériau, notamment un acier, différent d'un premier matériau, notamment de l'acier, de la doublure (3).

7. Doublure (3) selon l'une des revendications précédentes, **caractérisée en ce que** la pièce rapportée (12) comprend des moyens de fixation, notamment au moins un taraudage (13) d'axe sensiblement horizontal et longitudinal, destinés à la fixation d'une traverse de planche de bord sur la doublure (3).

8. Doublure (3) selon l'une des revendications précédentes, **caractérisée en ce que** la partie conformée (11) de la doublure (3) s'étend à la fois verticalement et longitudinalement vers l'avant, la pièce rapportée (12) s'étendant à la fois verticalement et longitudinalement vers l'arrière, notamment jusqu'à une feuillure (4) de porte avant.

9. Pied avant (2) de véhicule automobile (1), **caractérisé en ce qu'**il comprend une doublure (3) selon l'une des revendications précédentes.

10. Structure de caisse (100) de véhicule automobile (1), **caractérisée en ce qu'**elle comprend au moins un pied avant (2) selon la revendication précédente et/ou une doublure (3) selon l'une des revendications 1 à 8.

11. Véhicule automobile (1) **caractérisé en ce qu'**il comprend une structure de caisse (100) selon la revendication 10 et/ou au moins un pied avant selon la revendication 9 et/ou une doublure (3) selon l'une des revendications 1 à 8.

12. Procédé d'obtention d'une doublure (3) de pied avant (2) selon l'une des revendications 1 à 8, **caractérisé en ce qu'**il comprend les étapes suivantes :
- fourniture d'une première tôle métallique,
- emboutissage de la première tôle métallique afin d'obtenir une première partie de doublure (3) de pied avant (2) dotée d'une partie conformée (11),
- fourniture d'une deuxième tôle métallique,
- emboutissage de la deuxième tôle métallique afin d'obtenir une pièce à rapporter (12),
- assemblage, notamment par soudure et/ou collage et/ou rivetage, de la pièce à rapporter (12) sur la première partie de doublure (3) de pied avant (2) dotée d'une partie conformée (11) de sorte à former une doublure (3) de pied avant (2).

## Patentansprüche

1. Auskleidung (3) einer A-Säule (2) eines Kraftfahrzeugs (1), umfassend eine Befestigungshalterung (10), welche dafür vorgesehen ist, um einen Querträger eines Armaturenbretts des Kraftfahrzeugs (1) an der Auskleidung (3) zu befestigen, **dadurch gekennzeichnet** dadurch, dass die Befestigungshalterung (10) einen angepassten Abschnitt (11) der Auskleidung (3) und ein Ansetzteil (12) umfasst, welche jeweils eine Halbschale aufweisen.

2. Auskleidung (3) nach dem vorhergehenden Anspruch, **dadurch gekennzeichnet, dass** die Befestigungshalterung (10) einen Hohlkörper, insbesondere einen gehäuseförmigen Hohlkörper, umfasst oder bildet.

3. Auskleidung (3) nach einem der vorhergehenden Ansprüche, **dadurch gekennzeichnet, dass** der angepasste Abschnitt (11) der Auskleidung (3) eine konvexe Form aufweist, welche sich in das Innere des Kraftfahrzeugs (1) hin erstreckt.

4. Auskleidung (3) nach einem der vorhergehenden Ansprüche, **dadurch gekennzeichnet, dass** das Ansetzteil (12) eine konvexe Form aufweist, welche sich in das Innere des Kraftfahrzeugs (1) hin erstreckt und dafür geeignet ist, um mit dem angepassten Abschnitt (11) der Auskleidung (3) in Verlängerung zu gelangen.

5. Auskleidung (3) nach einem der vorhergehenden Ansprüche, **dadurch gekennzeichnet, dass** das Ansetzteil (12) an die Auskleidung (3) angeschweißt und/oder angeklebt und/oder angenietet ist.

6. Auskleidung (3) nach einem der vorhergehenden Ansprüche, **dadurch gekennzeichnet, dass** das Ansetzteil (12) eine Dicke von 1 mm bis 3,5 mm, insbesondere 2 mm, aufweist und/oder dass das Ansetzteil (12) eine Dicke aufweist, welche von der Dicke der Auskleidung (3) verschieden ist, und/oder
dass das Ansetzteil (12) aus einem zweiten Material besteht, insbesondere einem Stahl, welches von einem ersten Material, insbesondere Stahl, der Auskleidung (3) verschieden ist.

7. Auskleidung (3) nach einem der vorhergehenden Ansprüche, **dadurch gekennzeichnet, dass** das Ansetzteil (12) Befestigungsmittel umfasst, insbesondere mindestens ein Innengewinde (13) mit im Wesentlichen horizontaler und longitudinaler Achse, welche für die Befestigung eines Querträgers eines Armaturenbretts an der Auskleidung (3) vorgesehen sind.

8. Auskleidung (3) nach einem der vorhergehenden Ansprüche, **dadurch gekennzeichnet, dass** sich der angepasste Abschnitt (11) der Auskleidung (3) sowohl vertikal als auch longitudinal nach vorne erstreckt, wobei sich das Ansetzteil (12) sowohl vertikal als auch longitudinal nach hinten erstreckt, insbesondere bis zu einem vorderen Türfalz (4).

9. A-Säule (2) eines Kraftfahrzeugs (1), **dadurch gekennzeichnet, dass** sie eine Auskleidung (3) nach einem der vorhergehenden Ansprüche umfasst.

10. Karosseriestruktur (100) eines Kraftfahrzeugs (1), **dadurch gekennzeichnet, dass** sie zumindest eine A-Säule (2) nach dem vorangehenden Anspruch und/oder eine Auskleidung (3) nach einem der Ansprüche 1 bis 8 umfasst.

11. Kraftfahrzeug (1), **dadurch gekennzeichnet, dass** es eine Karosseriestruktur (100) nach Anspruch 10 und/oder mindestens eine A-Säule nach Anspruch 9 und/oder eine Auskleidung (3) nach einem der Ansprüche 1 bis 8 umfasst.

12. Verfahren zur Erzielung einer Auskleidung (3) einer A-Säule (2) nach einem der Ansprüche 1 bis 8, **dadurch gekennzeichnet, dass** es die folgenden Schritte umfasst:
Bereitstellung eines ersten Metallblechs,
Tiefziehen des ersten Metallblechs, um einen ersten Abschnitt der Auskleidung (3) der A-Säule (2) zu erzielen, welcher mit einem angepassten Abschnitt (11) versehen ist,
Bereitstellung eines zweiten Metallblechs,
Tiefziehen des zweiten Metallblechs, um ein Ansetzteil (12) zu erzielen,
Montage, insbesondere durch Schweißen und/oder Kleben und/oder Nieten, des Ansetzteils (12) auf dem ersten Abschnitt der Auskleidung (3) der A-Säule (2), welcher mit einem angepassten Abschnitt (11) versehen ist, um eine Auskleidung (3) der A-Säule (2) zu bilden.

## Claims

1. Lining (3) for an A-pillar (2) of a motor vehicle (1), comprising a mounting (10) designed to secure a dashboard crossbar of the motor vehicle (1) to the lining (3), **characterized in that** the mounting (10) comprises a shaped part (11) of the lining (3) and an attached component (12), each having a half-shell.

2. Lining (3) according to the preceding claim, **characterized in that** the mounting (10) comprises or forms a hollow body, in particular a hollow body in the form of a casing.

3. Lining (3) according to one of the preceding claims, **characterized in that** the shaped part (11) of the lining (3) has a convex form extending towards the interior of the motor vehicle (1).

4. Lining (3) according to one of the preceding claims, **characterized in that** the attached component (12) has a convex form extending towards the interior of the motor vehicle (1) and is capable of forming an extension of the shaped part (11) of the lining (3).

5. Lining (3) according to one of the preceding claims, **characterized in that** the attached component (12) is welded and/or adhesively bonded and/or riveted to the lining (3).

6. Lining (3) according to one of the preceding claims, **characterized in that** the attached component (12) has a thickness of 1 mm to 3.5 mm, in particular 2 mm, and/or **in that** the attached component (12) has a thickness different from the thickness of the lining (3) and/or **in that** the attached component (12) is made from a second material, in particular a steel, different from a first material, in particular steel, of the lining (3).

7. Lining (3) according to one of the preceding claims, **characterized in that** the attached component (12) comprises securing means, in particular at least one internal screw thread (13) having a substantially horizontal and longitudinal axis, designed to secure a dashboard crossbar to the lining (3).

8. Lining (3) according to one of the preceding claims, **characterized in that** the shaped part (11) of the lining (3) extends both vertically and longitudinally forwards, the attached component (12) extending both vertically and longitudinally rearwards, in particular as far as a front door rabbet (4).

9. A-pillar (2) of a motor vehicle (1), **characterized in that** it comprises a lining (3) according to one of the preceding claims.

10. Body structure (100) of a motor vehicle (1), **characterized in that** it comprises at least one A-pillar (2) according to the preceding claim and/or a lining (3) according to one of Claims 1 to 8.

11. Motor vehicle (1), **characterized in that** it comprises a body structure (100) according to Claim 10 and/or at least one A-pillar according to Claim 9 and/or a lining (3) according to one of Claims 1 to 8.

12. Method for obtaining a lining (3) of an A-pillar (2) according to one of Claims 1 to 8, **characterized in that** it comprises the following steps:
- supplying a first metal sheet,
- stamping the first metal sheet in order to obtain a first part of a lining (3) of an A-pillar (2) provided with a shaped part (11),
- supplying a second metal sheet,
- stamping the second metal sheet in order to obtain a component (12) to be attached,
- assembling, in particular by welding and/or adhesive bonding and/or riveting, the component (12) to be attached to the first part of a lining (3) of an A-pillar (2) provided with a shaped part (11) such as to form a lining (3) of an A-pillar (2).
